# EUROPÄISCHE PATENTSCHRIFT

(11) **EP 3 015 707 B1**
(45) Veröffentlichungstag und Bekanntmachung des Hinweises auf die Patenterteilung: **04.07.2018**
(21) Anmeldenummer: 15191780.4
(22) Anmeldetag: 27.10.2015
(51) Int. Cl.: F03D 80/40

(54) **WINDENERGIEANLAGE UND VERFAHREN ZUM ENTEISEN EINER WINDENERGIEANLAGE**
WIND TURBINE AND METHOD FOR DE-ICING A WIND TURBINE
ÉOLIENNE ET PROCÉDÉ DE DÉGIVRAGE D'UNE ÉOLIENNE

(30) Priorität: 31.10.2014 DE 102014115883
(43) Veröffentlichungstag der Anmeldung: 04.05.2016
(73) Patentinhaber: Senvion GmbH, 22297 Hamburg (DE)
(72) Erfinder: Hoffmann, Till, 49078 Osnabrück (DE); Petersen, Jens, 24811 Brekendorf (DE); Rzepka, Marek, 24848 Kropp (DE)
(74) Vertreter: Glawe, Delfs, Moll

(56) Entgegenhaltungen:
- EP-A1- 2 469 080
- EP-A1- 2 826 993
- EP-A2- 2 526 290
- DE-A1-102013 217 774
- US-A1- 2013 106 108

## Beschreibung

Die Erfindung betrifft eine Windenergieanlage mit den Merkmalen des Anspruchs 1. Des Weiteren betrifft die Erfindung ein Verfahren zum Enteisen einer Windenergieanlage mit den Merkmalen des Anspruchs 11.

Windenergieanlagen dienen als dezentrale Energieerzeuger dazu, kinetische Windenergie in elektrische Energie umzuwandeln. Die Windenergieanlage weist dazu einen Rotor mit Rotorblättern auf, der vom einströmenden Wind in Rotation versetzt werden kann. Ein Generator dient zur Umwandlung dieser Rotationsenergie in elektrische Energie.

Um einen Betrieb der Windenergieanlage auch bei klimatisch ungünstigen Bedingungen, wie insbesondere in kalten Regionen oder zur kalten Jahreszeit sicherzustellen, sind besondere Vorkehrungen notwendig. Bei Temperaturen um etwa 0° Celsius herum und darunter ist damit zu rechnen, dass sich auf den Rotorblättern Eis ablagert. Als negative Effekte solcher Eisbildung sind beispielsweise Änderungen der aerodynamischen Eigenschaften der Rotorblätter, Gewichtszunahme am Rotor und schließlich eine nicht unerhebliche Gefährdung von Personen und Sachen durch Eiswurf, also sich ablösende Eisbruchstücke, zu nennen.

Zur Beseitigung, aber auch teilweise zur Vorbeugung einer Vereisung weisen Windenergieanlagen für entsprechend gefährdete Einsatzgebiete daher typischerweise sogenannte Enteisungsvorrichtungen auf. Es handelt sich dabei in der Regel um elektrisch betriebene Heizvorrichtungen. Damit soll vorrangig die Oberfläche der Rotorblätter erwärmt werden, um das Eis anzutauen und damit abfallen zu lassen. Beheizt werden können die Rotorblätter auf elektrischem Wege, typischerweise mittels elektrischer Heizelemente. Beispielsweise kommen Heißluftheizungen, insbesondere durch Lüfter mit Heizspiralen, Heizfolien zum Aufkleben auf die Rotorblätter oder auch eingebettete Heizdrähte, Heizgitter oder ähnliches, die insbesondere in die oberste Schicht der Rotorblätter eingelassen sind, in Betracht. Auch kann beispielsweise eine Mikrowellenheizung Verwendung finden. Aus der DE 10 2013 217 774 A1 ist beispielsweise ein System und ein Verfahren für eine kombinierte Erkennungs- und Beheizungsfunktion bekannt, mit dessen Hilfe eine Vereisung an einem Teilabschnitt eines Rotorblattes erkannt und beseitigt werden kann.

Um ein schnelles und effektives Aufheizen der Rotorblätter zu ermöglichen, sind üblicherweise große elektrische Leistungen erforderlich. Da die elektrische Energie typischerweise vom stillstehenden Teil der Windenergieanlage auf die drehbar gelagerte Rotorwelle mit den daran befestigten Rotorblättern transportiert werden muss, werden häufig Schleifkontakte beziehungsweise Schleifringe eingesetzt. Aus Kosten- wie auch aus Effizienzgründen werden üblicherweise Kontakte eingesetzt, die zur Versorgung der übrigen elektrischen Geräte im Bereich des Rotors ausreichend dimensioniert sind, um die Betriebssicherheit zu garantieren. Beispielsweise wird ein gleichzeitiges Betreiben aller Blattwinkelverstellvorrichtungen beziehungsweise Pitchwinkelsteller sichergestellt. Zum gleichzeitigen Aufheizen mehrerer oder aller Rotorblätter steht allerdings in der Regel nicht genug elektrische Energie in der Rotornabe zur Verfügung. Es steht demnach nur eine begrenzte, maximale Heizleistung zur Verfügung.

Dementsprechend ist es aus dem Stand der Technik, beispielsweise der EP 2469080 A1 bekannt, die Rotorblätter einzeln zu enteisen. In diesem Fall erfolgt eine Enteisung abhängig von der Winkelposition der Rotorblätter einzeln.

Nachteilig hieran ist, dass aufgrund der begrenzt verfügbaren Heizleistung eine Aufheizung der Rotorblätter nur nacheinander erfolgen kann. Dies führt zu einer langen Enteisungsdauer.

Die Aufgabe der vorliegenden Erfindung besteht daher darin, eine Windenergieanlage und ein Verfahren zum Betrieb derselben anzugeben, mit denen die beschriebenen Nachteile beseitigt werden. Insbesondere soll die Zeitdauer bis zur vollständigen Enteisung der Windenergieanlage verkürzt werden.

Eine Windenergieanlage mit den Merkmalen des Anspruchs 1 löst diese Aufgabe. Die Enteisungsvorrichtung ist dazu ausgebildet, die zur Verfügung stehende Heizleistung auf die Rotorblätter aufzuteilen. Es kann demnach ein einzelnes Rotorblatt alleine oder es können mehrere Rotorblätter gleichzeitig beheizt und damit enteist werden. Dies bedeutet, dass bereits bei einer zeitweisen Abschaltung oder Reduzierung der Heizleistung eines Blattes ein weiteres Blatt beheizt werden kann. Hierzu kann nämlich die freiwerdende Heizleistung verwendet werden. Damit wird die Gesamtdauer für den Aufheizvorgang verkürzt. Die Aufteilung geschieht dynamisch, insbesondere während eines laufenden Enteisungsvorganges. Unter einer dynamischen Einstellung beziehungsweise Einstellbarkeit der Heizleistung wird dabei eine Veränderung beziehungsweise Veränderbarkeit der Heizleistung einzelner Rotorblätter während des Enteisungsvorganges verstanden, also insbesondere während des Betriebs der Enteisungsvorrichtung. Eine dynamische Verwendung beziehungsweise Verteilung bezieht sich vorzugsweise auf eine Aufteilung der insgesamt zur Verfügung stehenden Heizleistung auf mehrere Rotorblätter mit zeitlich veränderlichen Anteilen.

Die Windenergieanlage beziehungsweise deren Enteisungsvorrichtung ist vorzugsweise dazu ausgebildet, mehrere der Rotorblätter parallel zu enteisen. Das bedeutet insbesondere, dass mehrere Enteisungsvorgänge parallel ablaufen, so dass die Gesamtzeit zur Enteisung aller Blätter reduziert wird. Vorzugsweise laufen die Enteisungsvorgänge sogar gleichzeitig ab. Besonders vorteilhaft ist demnach die zeitliche Veränderung der Anteile während paralleler Enteisungsvorgänge mehrerer Blätter.

Bevorzugt ist die Enteisungsvorrichtung dazu ausgebildet, für eines der Rotorblätter zumindest zeitweise nicht verwendete Heizleistung dynamisch für wenigstens ein anderes der Rotorblätter zu verwenden. Beim Aufheizvorgang kann somit teilweise ungenutzte Heizleistung bereits zum Vorheizen anderer Rotorblätter verwendet werden. Bevorzugt ist gegen Ende des Enteisungsvorgangs eines Rotorblattes eine höhere Heizleistung für ein anderes Rotorblatt nutzbar als zum Anfang des Enteisungsvorgangs des betreffenden Blattes. Vorzugsweise kann hierzu ein mehrfaches Umschalten und/oder ein zeitlich variables Aufteilen der Heizleistung zwischen den einzelnen Blättern vorgesehen sein. Die den einzelnen Blättern zugeordnete Heizleistung kann insbesondere durch eine stufenlose Einstellung und/oder eine feste oder flexible Abstufung einstellbar sein.

Die Heizleistung der Rotorblätter ist insbesondere dynamisch einstellbar. Insbesondere ist die Heizleistung von einem Höchstwert reduzierbar. Damit wird erreicht, dass eine Anpassung des Heizvorganges an die jeweiligen Erfordernisse des Blattes durchführbar ist. Hiermit kann beispielsweise auf Höchsttemperaturgrenzen, unterschiedlichen Eisbelag oder auf unterschiedliche Außentemperaturen Rücksicht genommen werden. Vorzugsweise kann die Heizleistung separat für jedes der Rotorblätter eingestellt werden. Damit kann individuell eine solche Anpassung vorgenommen werden. Insbesondere wird kurz vor Erreichen eines hinreichenden Enteisungszustandes beziehungsweise einer entsprechenden Temperatur des Rotorblattes in der Regel die Heizleistung am entsprechenden Blatt reduziert. Dies geschieht einerseits, um die Zieltemperatur möglichst genau zu erreichen. Bei einer konstant gehaltenen Heizleistung bis zum Erreichen der Zieltemperatur kommt es nämlich typischerweise zum Überschwingen der Temperatur. Andererseits erfolgt diese Reduzierung der Heizleistung zum Schutz der temperaturempfindlichen glasfaserverstärkten Kunststoffe (GFK) als Basismaterial der Rotorblätter.

Es ist vorzugsweise wenigstens eine Regelungseinheit, insbesondere eine Phasenanschnittsregelung zur Einstellung der jeweiligen Heizleistung der Rotorblätter und/oder zur Verteilung der Heizleistung auf die Rotorblätter vorgesehen. Eine entsprechende Regelungseinheit sorgt für eine automatische oder zumindest halbautomatische Steuerung beziehungsweise Regelung der Heizleistung der Rotorblätter. Beispielsweise im Fall einer Phasenanschnittsregelung und/oder einer Pulsweitenregelung sorgen diese dafür, dass die entsprechende Einstellung beziehungsweise Verteilung der Heizleistung auf entsprechende Weise möglich ist. Bei einer Phasenanschnittsregelung ist in der Regel eine mehr oder weniger stufenlose Einstellung der Heizleistung möglich. Hierzu wird die Stromzufuhr geregelt. Eine Pulsweitenregelung sorgt durch Ein- und Abschalten der Heizleistung mit unterschiedlichen Zeitkonstanten für einen entsprechend gepulsten Betrieb und damit ebenfalls im Mittel für eine Anpassung der Heizleistung. Die Zeitkonstanten für das Ein- und Abschalten bewegen sich bei einer Blattheizung von Windenergieanlagen typischerweise im Minutenbereich. Alternativ kann die Heizleistung auch mit einer im Stand der Technik bekannten Pulspaketsteuerung geregelt werden.

Weiter bevorzugt ist bei einer zeitweisen Reduzierung und/oder Abschaltung der Heizleistung eines Rotorblattes die dabei ungenutzte Heizleistung zumindest teilweise einem anderen Rotorblatt zuführbar. Dies bedeutet, dass Vorkehrungen getroffen werden, die auch ein nur zeitweises Abschalten oder Reduzieren der Heizleistung nutzen, um den freiwerdenden Anteil an der verfügbaren Heizleistung auf ein anderes Rotorblatt weiterzugeben.

Besonders bevorzugt ist wenigstens eine Vorrichtung zur Ermittlung der Vereisung der Rotorblätter vorgesehen. Weiter bevorzugt kann auch der Umfang der Vereisung ermittelt werden. Insbesondere ist eine Vorrichtung zur Temperaturmessung vorgesehen. Eine solche Temperaturmessung kann beispielsweise an einem oder mehreren Punkten des jeweiligen Rotorblattes erfolgen, vorzugsweise mittels Temperatursensoren. In der Regel werden die genannten Vorrichtungen zumindest für jedes Rotorblatt separat ausgebildet sein.

Damit kann eine zielgerichtete und sichere Steuerung der Heizleistung vorgenommen werden.

Besonders bevorzugt ist die Verteilung der Heizleistung auf die Rotorblätter abhängig vom Vereisungszustand und/oder von der Temperatur der Rotorblätter. Eine Kopplung der Steuerung der Heizleistung an diese Parameter ermöglicht eine entsprechende Enteisung anhand von Messdaten. Die Enteisung kann damit automatisiert erfolgen.

Zumindest zeitweise ist bevorzugt einem einzigen Rotorblatt die gesamte verfügbare Heizleistung zuführbar. Dies ist erforderlich, um ein schnelles Aufheizen eines der Rotorblätter sicherzustellen. Im weiteren Verlauf der Enteisung kann dann ein entsprechendes Weiterleiten oder Umleiten frei werdender Heizleistung auf andere Rotorblätter vorgenommen werden.

Insbesondere ist die zur Verfügung stehende Heizleistung zwischen mehreren Rotorblättern verteilbar. Die Verteilung erfolgt insbesondere stufenlos oder gestuft. Eine stufenlose Verteilung setzt eine entsprechende stufenlose Regelung der Heizleistung voraus. Eine abgestufte Regelung der Heizleistung kann ebenfalls vorteilhaft sein. Diese ist allerdings dynamisch veränderbar. Vorzugsweise sind mehrere unterschiedliche Niveaus der Heizleistung je Rotorblatt einstellbar. Somit kann auf unterschiedliche Betriebsbedingungen reagiert werden. Die Zeitkonstanten für das Ein- und Abschalten bewegen sich bei einer Blattheizung von Windenergieanlagen typischerweise im Minuten- bis Sekundenbereich. Alternativ kann die Heizleistung auch mit einer im Stand der Technik bekannten Pulspaketsteuerung geregelt werden.

Ein Verfahren zum Enteisen einer Windenergieanlage mit den Schritten des Anspruchs 11 löst ebenfalls die eingangs gestellte Aufgabe. Demnach ist bei der Windenergieanlage mit einem Rotor und mehreren Rotorblätter wenigstens eine Enteisungsvorrichtung vorgesehen. Das Verfahren ist dadurch gekennzeichnet, dass die verfügbare Heizleistung dynamisch zwischen mehreren der Rotorblätter verteilt werden kann. Dies bedeutet, dass während der Enteisung eine zeitweise, also dynamische Einstellung der Heizleistung vorgenommen werden kann. Dabei ist für eine gleichmäßige oder auch ungleichmäßige Verteilung zwischen den Rotorblättern zu sorgen. Allerdings kann es sich bevorzugt auch um eine Verteilung auf nur ein einziges Rotorblatt handeln, wenn nämlich die gesamte Heizleistung zur Aufheizung dieses Blattes verwendet wird oder werden muss. Unter einer dynamischen Einstellung beziehungsweise Einstellbarkeit der Heizleistung wird auch hier eine Veränderung beziehungsweise Veränderbarkeit der Heizleistung einzelner Rotorblätter während des Enteisungsvorganges verstanden, also insbesondere während des Betriebs der Enteisungsvorrichtung. Eine dynamische Verwendung beziehungsweise Verteilung bezieht sich vorzugsweise auf eine Aufteilung der insgesamt zur Verfügung stehenden Heizleistung auf mehrere Rotorblätter mit zeitlich veränderlichen Anteilen.

Die Windenergieanlage beziehungsweise deren Enteisungsvorrichtung kann vorzugsweise mehrere der Rotorblätter parallel enteisen. Das bedeutet insbesondere, dass mehrere Enteisungsvorgänge parallel ablaufen, so dass die Gesamtzeit zur Enteisung aller Blätter reduziert wird. Vorzugsweise laufen die Enteisungsvorgänge sogar gleichzeitig ab. Besonders vorteilhaft ist demnach die zeitliche Veränderung der Anteile während paralleler Enteisungsvorgänge mehrerer Blätter.

Bevorzugt wird die für eines der Rotorblätter zumindest zeitweise nicht verwendete Heizleistung dynamisch für wenigstens ein anderes der Rotorblätter verwendet. Dies entspricht der Grundidee, dass der Enteisungs- beziehungsweise Aufheizvorgang so schnell wie möglich für die gesamte Windenergieanlage erledigt werden soll. Hierzu ist erforderlich, dass Teile der elektrischen Energie für die Heizleistung für denselben Zweck bei einem anderen Rotorblatt vorgesehen werden. Das Vorstehende kann insbesondere bei einer Reduzierung der Heizleistung eines Rotorblattes eintreten. Bevorzugt wird gegen Ende des Enteisungsvorgangs eines Rotorblattes eine höhere Heizleistung für ein anderes Rotorblatt genutzt als zum Anfang des Enteisungsvorgangs des betreffenden Blattes. Vorzugsweise kann hierzu ein mehrfaches Umschalten und/oder variables Aufteilen der Heizleistung zwischen den einzelnen Blättern vorgesehen sein. Es kann insbesondere eine stufenlose Einstellung und/oder feste oder flexible Abstufung der den einzelnen Blättern zugeordneten Heizleistung erfolgen.

Weiter bevorzugt wird die verfügbare Heizleistung bei Inbetriebnahme eines weiteren Verbrauchers reduziert, insbesondere bei Betrieb einer Blattwinkelverstellvorrichtung wenigstens eines der Rotorblätter. Damit wird sichergestellt, dass die für einen reibungslosen Betrieb der Windenergieanlage erforderlichen Komponenten auch bei Inbetriebnahme der Enteisungsvorrichtung sicher betrieben werden können. In aller Regel handelt es sich dabei um eine nur zeitweise Reduzierung der Heizleistung.

Die zur Verfügung stehende Heizleistung wird stufenlos oder gestuft auf die Rotorblätter verteilt. Damit kann abhängig von der eingesetzten Regelung für die Heizleistung der Rotorblätter eine entsprechende dynamische Verteilung der zur Verfügung stehenden Leistung erfolgen.

Wenigstens eine Regelungseinheit wird zur dynamischen Einstellung und/oder Verteilung der Heizleistung auf die Rotorblätter verwendet. Vorzugsweise wird eine Phasenanschnittsregelung und/oder eine Pulsweitenregelung verwendet.

Eine weitere bevorzugte Ausführungsform sieht vor, dass mindestens immer zwei Rotorblätter gleichzeitig beheizt werden. Es ist insbesondere auch vorgesehen, dass die verfügbare Heizleistung zeitweise gleichzeitig auf drei Rotorblätter aufgeteilt wird. Dieses Verfahren hat den Vorteil, dass alle Blätter gleichzeitig vorgeheizt werden bis kurz vor der Temperatur, bei der mit dem Abfallen von Eisstücken zu rechnen ist. Sodann wird gezielt bei einem Rotorblatt oder zwei Rotorblättern die Temperatur durch Erhöhung der Heizleistung so gesteigert, dass das Eis abfällt. Während eines Heizvorganges steht der Rotor vorzugsweise still. Bevorzugt befinden sich die beheizten Blätter in der unteren Hälfte des Rotorkreises. Insbesondere nach erfolgreicher Enteisung wenigstens eines Blattes wird die Rotorposition verändert, indem der Rotor gedreht wird, um das verbleibende Blatt oder die verbleibenden Blätter zu enteisen.

Der Vorteil dieses Verfahrens besteht darin, dass der Zeitraum minimiert wird, in der ein Aufenthalt im Bereich der Windenergieanlage zur Personengefährdung durch Eisabwurf führt. Bei den bislang bekannten Verfahren muss nach der Enteisung des ersten Rotorblattes erst die Aufheizzeit des nächsten Rotorblattes abgewartet werden, bevor es erneut zu Eisabwurf kommt. In der gesamten Zeit muss der Bereich der WEA aus Sicherheitsgründen abgesperrt sein. Bei dem erfindungsgemäßen Verfahren wird die Gefährdungszeit zu einem kompakten Zeitintervall zusammengefasst.

Bevorzugte Ausführungen der Erfindung ergeben sich auch aus den Ansprüchen.

Ein bevorzugtes Ausführungsbeispiel der Erfindung wird im Folgenden anhand der Figuren der Zeichnung näher beschrieben. In diesen zeigen:
- Fig. 1:: eine Windenergieanlage in einer Frontalansicht, und
- Fig. 2: ein Diagramm zu einem beispielhaften Enteisungsprozess einer Windenergieanlage.

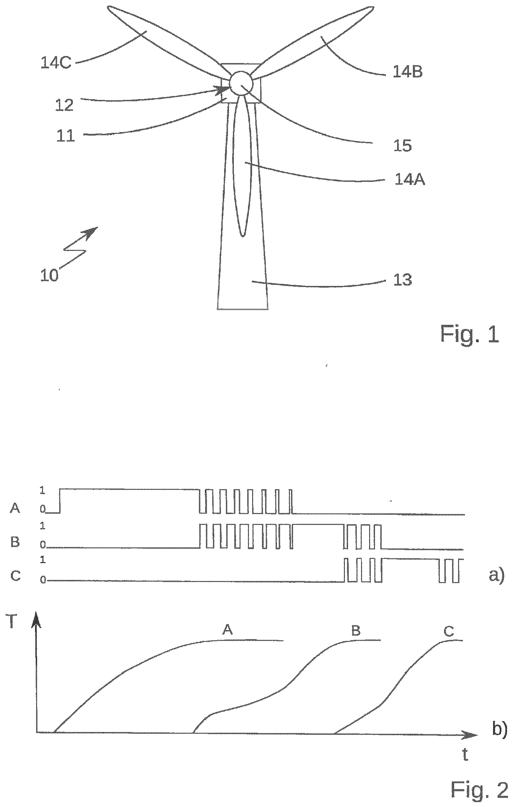

In der Fig. 1 ist exemplarisch eine Windenergieanlage 10 skizziert. Ein Rotor 12 ist dabei um eine im Wesentlichen horizontale Drehachse an einer Gondel 11 gelagert. Die Gondel 11 wiederum ist um eine vertikale Drehachse drehbar auf dem Turm 13 gelagert.

Der Rotor 12 weist in diesem Fall drei Rotorblätter 14A, 14B und 14C auf. Die Rotorblätter 14A, 14B, 14C sind mit einem ihrer beiden Endbereiche an einer Nabe 50 befestigt. Die Drehachse des Rotors 12 läuft durch den Nabenmittelpunkt. Sie ist zumindest im Wesentlichen horizontal ausgerichtet, in der Regel aber zwischen 3° und 8° zur Horizontalen geneigt.

Durch die oben bereits erwähnte vertikale Achse, mit der die Gondel 11 drehbar auf dem Turm 13 gelagert ist, wird eine Nachführung des Rotors 12 mit wechselnder Windrichtung ermöglicht. So kann sichergestellt werden, dass die Nabe 15 und damit die Drehachse des Rotors 12 während des Betriebs zumindest im Wesentlichen dauerhaft in Windrichtung ausgerichtet ist.

In der Gondel 11 sind die Wesentlichen technischen Anlagen zum Betrieb der Windenergieanlage 10 angeordnet. Es handelt sich dabei primär um die Rotorlagerung, gegebenenfalls ein Getriebe, einen hier nicht dargestellten Generator und einige weitere Aggregate und Nebenaggregate. Der Generator dient zur Umwandlung der Rotationsenergie des angetriebenen Rotors 12 aufgrund der Windeinströmung in elektrische Energie. Eine Steuerung sorgt für einen möglichst optimalen Betrieb der Windenergieanlage 10.

Außerdem ist in der Regel noch wenigstens eine Vorrichtung zur Einstellung des Blattanstellwinkels, des sogenannten Pitch, vorgesehen. Diese kann jeweils die Rotorblattstellung relativ zum Wind durch Drehung der Rotorblätter 14A, 14B, 14C um deren Längsachse einstellen. Damit ist eine Regelung der Rotordrehzahl in einen optimalen Bereich bei unterschiedlichen Windgeschwindigkeiten möglich. Durch entsprechende Einstellung des Blattanstellwinkels kann sowohl für einen Antrieb wie auch für einen Stillstand des Rotors 12 gesorgt werden.

Bei niedrigen Temperaturen und entsprechender Luftfeuchtigkeit kann Eisbildung auf der Oberfläche der Rotorblätter 14A, 14B, 14C erfolgen. Eine Vereisung der Rotorblätter 14A, 14B, 14C sorgt für verschiedene nachteilige Effekte. Insbesondere kommt es zu einer Änderung der aerodynamischen Eigenschaften, einer Gewichtszunahme, Rotorunwuchten und sogar möglichen Schäden durch herabfallende oder hinweggeschleuderte Eisbruchstücke.

Dementsprechend werden üblicherweise sogenannte Enteisungsvorrichtungen eingesetzt. Diese können dazu eingesetzt werden, um einerseits vereiste Rotorblätter 14A, 14B, 14C vom Eis zu befreien und andererseits einen erneuten Eisbefall während des Betriebs zu verhindern. Die Enteisung erfolgt durch Erwärmen der Rotorblattoberfläche, so dass sich das Eis von der Oberfläche durch teilweises Auftauen ablöst. Um dabei eine Beschädigung anderer Komponenten der Windenergieanlage 10 und insbesondere anderer Rotorblätter 14A, 14B, 14C zu verhindern, erfolgt die Enteisung typischerweise im Stillstand des Rotors 12. Insbesondere werden dabei nur senkrecht nach unten oder zumindest schräg nach unten zeigende Rotorblätter zum Enteisen beheizt, also in der Regel nur diejenigen Rotorblätter, die sich in der unteren Hälfte des Rotorkreises befinden. In der Fig. 1 ist dies nur das Rotorblatt 14A. So können abfallende Eisbruchstücke ungestört nach unten fallen.

Geeignete Enteisungsvorrichtungen, die hier nicht im Detail dargestellt sind, können auf verschiedene Weise arbeiten. Insbesondere handelt es sich dabei um elektrische Heizvorrichtungen.

Beispielsweise kommen mit warmer oder heißer Luft betriebene Enteisungsvorrichtungen in Betracht. Bei diesen wird Luft mittels elektrischer Heizelemente, wie zum Beispiel Heizspiralen oder Heizfäden erwärmt. Diese erwärmte Luft wird dann im Innern der jeweils beheizten der Rotorblätter 14A, 14B, 14C verteilt beziehungsweise zirkuliert, um eine gleichmäßige Erwärmung der damit durchströmten Rotorblätter 14A, 14B, 14C zu erreichen.

Alternativ kann auch beispielsweise eine Enteisung der Rotorblätter 14A, 14B, 14C durch direkte Erwärmung der Blattoberflächen erfolgen. Hierzu können elektrische Heizelemente, wie beispielsweise Heizdrähte, Heizgitter und ähnliches, in das Wandmaterial der Rotorblätter 14A, 14B, 14C eingelassen sein. Häufig erfolgt dies in den äußeren Lagen der Wände. Bei den in der Regel aus glasfaserverstärktem Kunststoff (GFK) bestehenden Wänden ist ein schichtweiser Aufbau typisch, so dass die Heizelemente einfach bei der Produktion eingebracht werden können.

Eine weitere Möglichkeit stellen so genannte Heizfolien zum Aufkleben auf die Rotorblattoberfläche dar. Diese weisen ebenfalls elektrische Heizelemente auf, wie beispielsweise Heizdrähte, Heizgitter oder ähnliches. Durch Aufbringen auf die Blattoberfläche kann die Montage gegenüber einem Einbringen in das Material vereinfacht werden.

Jedenfalls ist zu beachten, dass einerseits für eine sorgfältige Enteisung gesorgt werden muss, um die genannten negativen Effekte zu vermeiden. Andererseits sind auch Grenzwerte, wie beispielsweise maximale Temperaturen der verwendeten Materialien einzuhalten. Bei GFK liegt der Maximalwert typischerweise bei einer Temperatur von etwa 65°C. Temperaturen wenig oberhalb sorgen möglicherweise bereits für eine irreparable Schädigung des Materials. Diesem Umstand ist bei der Enteisung Rechnung zu tragen.

Die verfügbare Heizleistung ist in der Regel begrenzt. Zum Betrieb einzelner elektrischer Verbraucher im Bereich des Rotor 12 ist typischerweise ein Schleifring am Rotor 12 vorgesehen. Dieser überträgt elektrische Energie aus dem Bereich der Gondel 11 zum Rotor 12, wo diese normalerweise vor allem für die Blattwinkelverstellung genutzt wird. Um den Schleifring nicht unnötig überdimensioniert nur für die Enteisung auslegen zu müssen, ist die verfügbare Heizleistung im Bereich der Rotornabe 15 beziehungsweise des Rotors 12 begrenzt.

Die verfügbare Heizleistung reicht damit häufig nur gerade für eine Enteisung eines der vorhandenen Rotorblätter 14A, 14B, 14C zur Zeit. Dies führt dazu, dass die Rotorblätter 14A, 14B, 14C üblicherweise nur einzeln nacheinander enteist werden können. Außerdem erfolgt das Enteisen in der Regel nur mit vergleichsweise niedrigen Temperaturen zum Schutz der verwendeten Materialien. Aus diesen Gründen benötigt eine Enteisung daher Zeiträume, die durchaus im Bereich von etwa 10 Minuten bis hin zu 1 Stunde liegen können. In diesem Zeitraum produziert die Windenergieanlage 10 keinen Strom.

Typischerweise wird die verfügbare Heizleistung daher zunächst zum Aufheizen eines ersten Rotorblattes 14A verwendet. Dieses beheizte Rotorblatt 14A ist typischerweise nach unten ausgerichtet, wie in Fig. beispielhaft zu sehen ist. Gegen Ende des Aufheizvorganges, also wenn das Rotorblatt 14A seine Solltemperatur nahezu erreicht hat, ist weniger Heizleistung erforderlich. Diese wird dazu reduziert. Dies kann beispielsweise durch zeitweises Ausschalten der Heizleistung für das erste Rotorblatt 14A erfolgen. Erfindungsgemäß wird die damit zumindest zeitweise freiwerdende Heizleistung dann zum Aufheizen des zweiten Rotorblatts 14B verwendet. Entsprechendes gilt dann für das dritte Rotorblatt 14C oder auch weitere Rotorblätter. Hierzu ist der Rotor 12 in die entsprechende Position zu drehen, um die derzeit beheizten Rotorblätter nach unten zeigen zu lassen.

Das Reduzieren und Umverteilen der Heizleistung kann auf unterschiedliche Weise erfolgen. Bei einer Pulsweitenmodulation erfolgt ein abwechselndes Einschalten der Heizleistung für die Rotorblätter 14A beziehungsweise 14B. Bei einer Modulation des Tastverhältnisses der Pulsweitenmodulation nimmt somit die dem Rotorblatt 14A zugeordnete Heizleistung immer mehr ab, während diejenige des Rotorblattes 14B immer mehr zunimmt.

Sobald dann das Rotorblatt 14A auf seiner Solltemperatur und damit im enteisten Zustand ist, kann Rotorblatt 14B nicht mehr mit reduzierter, sondern nun mit voller Heizleistung betrieben werden. Auch dieses Rotorblatt 14B erreicht nach einiger Zeit nahezu seinen Sollzustand. Dann wird auch diese Heizleistung reduziert, um die überschüssige Heizleistung zunächst zeitweise dem dritten Rotorblatt 14C zuzuordnen. Somit erreicht auch dieses Rotorblatt 14C früher seine Solltemperatur als bei einer streng sequenziellen Aufheizung gemäß Stand der Technik.

Dies ist insbesondere in Fig. 2 dargestellt. Im oberen Diagramm a) ist die Heizleistung mit einer 1 für den Einschaltzustand beziehungsweise einer 0 für den Ausschaltzustand markiert. Jeweils sind die entsprechenden Heizleistungen an den Rotorblättern 14A, 14B beziehungsweise 14C als Verläufe gezeigt und mit A, B beziehungsweise C bezeichnet. Im unteren Diagramm b) der Fig. 2 sind parallel dazu ebenfalls im zeitlichen Verlauf die Temperaturkurven für die drei Rotorblätter 14A, 14B, 14C ebenfalls mit A, B, C gezeigt. Gegenüber dem Verlauf des ersten Rotorblattes 14A zeigt sich bei den Rotorblättern 14B und 14C ein deutlich kürzerer Aufheizvorgang. Außerdem nimmt die Gesamtzeit für den erfindungsgemäßen Aufheizvorgang aller drei Rotorblätter 14A, 14B, 14C mit partieller Aufheizung anderer Rotorblätter 14A, 14B, 14C insgesamt deutlich gegenüber einer nacheinander erfolgenden Aufheizung ab.

Alternativ zu einem gepulsten Schalten der Heizleistung für die einzelnen Rotorblätter 14A, 14B und 14C kann auch eine gestufte oder stufenlose Einstellung der Heizelemente genutzt werden, insbesondere mit eine Phasenanschnittsregelung. Dann werden die Heizleistungen jeweils über die Stromzufuhr eingestellt. Konkret werden typischerweise nur wiederkehrende Phasenabschnitte des Wechselstroms für die Heizung eines Blattes verwendet, so dass die Heizleistung hierdurch reduziert wird. Die bei einem Blatt überschüssige beziehungsweise ungenutzte Heizleistung in Form elektrischen Stroms wird beziehungsweise kann dann den jeweiligen anderen Rotorblättern 14B, 14C und 14A zugeordnet werden.

Das oben beschriebene Verfahren setzt eine entsprechende Ausbildung der Windenergieanlage 10 voraus. Dementsprechend ist eine geeignete Einstellmöglichkeit beziehungsweise Regelung der Heizleistung für die einzelnen Rotorblätter 14 A, 14B, 14C erforderlich. Dies kann beispielsweise wie beschrieben durch Pulsweitenmodulation, Phasenanschnittsregelung oder ähnliches erfolgen. Auch andere entsprechende Verfahren sind denkbar.

Um die Steuerung für die Enteisung betreiben zu können, ist es erforderlich, den jeweiligen Enteisungszustand beziehungsweise Temperaturzustand der Rotorblätter 14A, 14B, 14C zu ermitteln. Insbesondere sind daher geeignete Temperatursensoren im Bereich der Rotorblätter 14A, 14B, 14C erforderlich. Sie sind nicht im Detail dargestellt, müssen aber geeignet angeordnet sein, um Rückschlusse auf die vorherrschenden Temperaturen geben zu können, so dass eine entsprechende Regelung der Heizleistung erfolgen kann.

### Bezugszeichenliste

- 10: Windenergieanlage
- 11: Gondel
- 12: Rotor
- 13: Turm
- 14A: Rotorblatt
- 14B: Rotorblatt
- 14C: Rotorblatt
- 15: Nabe

## Patentansprüche

1. Windenergieanlage, mit einem Rotor (12) mit Rotorblättern (14A, 14B, 14C) zum Antrieb eines Generators zur Erzeugung elektrischer Energie und mit einer Enteisungsvorrichtung für die Rotorblätter (14A, 14B, 14C), wobei die Enteisungsvorrichtung elektrische Heizleistung zum Enteisen der Rotorblätter (14A, 14B, 14C) verwendet, **dadurch gekennzeichnet, dass** die Enteisungsvorrichtung dazu ausgebildet ist, die maximal zur Verfügung stehende Heizleistung dynamisch zwischen mehreren der Rotorblätter (14A, 14B, 14C) zu verteilen.

2. Windenergieanlage nach Anspruch 1, **dadurch gekennzeichnet, dass** die Enteisungsvorrichtung dazu ausgebildet ist, mehrere der Rotorblätter (14A, 14B, 14C) parallel, vorzugsweise gleichzeitig, zu enteisen.

3. Windenergieanlage nach Anspruch 1 oder 2, **dadurch gekennzeichnet, dass** die Enteisungsvorrichtung dazu ausgebildet ist, für eines der Rotorblätter (14A, 14B, 14C) zumindest zeitweise nicht verwendete Heizleistung dynamisch für wenigstens ein anderes der Rotorblätter (14B, 14C, 14A) zu verwenden.

4. Windenergieanlage nach einem der vorhergehenden Ansprüche, **dadurch gekennzeichnet, dass** die Heizleistung der Rotorblätter (14A, 14B, 14C) dynamisch einstellbar ist, vorzugsweise separat für jedes der Rotorblätter (14A, 14B, 14C).

5. Windenergieanlage nach einem der vorhergehenden Ansprüche, **dadurch gekennzeichnet, dass** wenigstens eine Regelungseinheit, insbesondere eine Phasenanschnittsregelung und/oder Pulsweitenregelung, zur Einstellung der jeweiligen Heizleistung der Rotorblätter (14A, 14B, 14C) und/oder zur Verteilung der Heizleistung auf die Rotorblätter (14A, 14B, 14C) vorgesehen ist.

6. Windenergieanlage nach einem der vorhergehenden Ansprüche, **dadurch gekennzeichnet, dass** bei einer zeitweisen Reduzierung und/oder Abschaltung der Heizleistung eines Rotorblattes (14A; 14B; 14C) die ungenutzte Heizleistung zumindest teilweise einem anderen Rotorblatt (14B; 14C; 14A) zuführbar ist.

7. Windenergieanlage nach einem der vorhergehenden Ansprüche, **dadurch gekennzeichnet, dass** wenigstens eine Vorrichtung zur Ermittlung der Vereisung der Rotorblätter (14A, 14B, 14C), bevorzugt des Umfangs der Vereisung, und/oder zur Temperaturmessung vorgesehen ist.

8. Windenergieanlage nach einem der vorhergehenden Ansprüche, **dadurch gekennzeichnet, dass** die Verteilung der Heizleistung auf die Rotorblätter (14A, 14B, 14C) abhängig vom Vereisungszustand und/oder von der Temperatur der Rotorblätter (14A, 14B, 14C) ist.

9. Windenergieanlage nach einem der vorhergehenden Ansprüche, **dadurch gekennzeichnet, dass** einem Rotorblatt (14A; 14B; 14C) zumindest zeitweise die gesamte verfügbare Heizleistung zuführbar ist.

10. Windenergieanlage nach einem der vorhergehenden Ansprüche, **dadurch gekennzeichnet, dass** die verfügbare Heizleistung zwischen mehreren Rotorblättern (14A; 14B; 14C) dynamisch verteilbar ist, besonders bevorzugt stufenlos oder gestuft.

11. Verfahren zum Enteisen einer Windenergieanlage (10), insbesondere einer Windenergieanlage (10) nach einem der vorhergehenden Ansprüche, mit einem Rotor (12) mit mehreren Rotorblättern (14A, 14B, 14C) und mit wenigstens einer Enteisungsvorrichtung für die Rotorblätter (14A, 14B, 14C), **dadurch gekennzeichnet, dass** die maximal verfügbare Heizleistung dynamisch zwischen mehreren der Rotorblätter (14A, 14B, 14C) verteilt werden kann.

12. Verfahren zum Enteisen einer Windenergieanlage nach Anspruch 11, **dadurch gekennzeichnet, dass** mehrere der Rotorblätter (14A; 14B; 14C) parallel, vorzugsweise gleichzeitig, enteist werden.

13. Verfahren zum Enteisen einer Windenergieanlage nach Anspruch 11 oder 12, **dadurch gekennzeichnet, dass** die durch Reduzierung der Heizleistung eines der Rotorblätter (14A; 14B; 14C) freiwerdende Heizleistung zumindest teilweise wenigstens einem anderen der Rotorblätter (14A; 14B; 14C) zugeführt wird.

14. Verfahren zum Enteisen einer Windenergieanlage nach einem der Ansprüche 11 bis 13, **dadurch gekennzeichnet, dass** die verfügbare Heizleistung bei Inbetriebnahme eines weiteren Verbrauchers, insbesondere einer Blattwinkelverstellvorrichtung eines der Rotorblätter (14A; 14B; 14C), reduziert wird.

15. Verfahren zum Enteisen einer Windenergieanlage nach einem der Ansprüche 11 bis 14, **dadurch gekennzeichnet, dass** die verfügbare Heizleistung stufenlos oder gestuft zwischen den Rotorblättern (14A, 14B, 14C) verteilt wird und/oder dass die jeweilige Heizleistung der Rotorblätter (14A, 14B, 14C) mittels einer Regelungseinheit, insbesondere einer Phasenanschnittsregelung und/oder Pulsweitenregelung, auf die Rotorblätter (14A, 14B, 14C) dynamisch verteilt wird.

## Claims

1. Wind turbine having a rotor (12) with rotor blades (14A, 14B, 14C) for driving a generator for generating electrical energy and having a de-icing device for the rotor blades (14A, 14B, 14C), **characterized in that** the de-icing device uses electrical heating power for de-icing the rotor blades (14A, 14B, 14C), **characterized in that** the de-icing device is designed to distribute the maximum available heating power among a plurality of the rotor blades (14A, 14B, 14C) in a dynamic manner.

2. Wind turbine according to Claim 1, **characterized in that** the de-icing device is designed to de-ice a plurality of the rotor blades (14A, 14B, 14C) in parallel, preferably at the same time.

3. Wind turbine according to Claim 1 or 2, **characterized in that** the de-icing device is designed to use heating power which is at least temporarily not used for one of the rotor blades (14A, 14B, 14C) for at least one other one of the rotor blades (14B, 14C, 14A) in a dynamic manner.

4. Wind turbine according to any of the preceding claims, **characterized in that** the heating power of the rotor blades (14A, 14B, 14C) is dynamically adjustable, preferably separately for each of the rotor blades (14A, 14B, 14C).

5. Wind turbine according to any of the preceding claims, **characterized in that** at least one control unit, in particular a phase gating controller and/or pulse-width controller, is provided for adjusting the respective heating power of the rotor blades (14A, 14B, 14C) and/or for distributing the heating power to the rotor blades (14A, 14B, 14C).

6. Wind turbine according to any of the preceding claims, **characterized in that**, in the case of a temporary reduction in and/or disconnection of the heating power of a rotor blade (14A, 14B, 14C), at least some of the unused heating power can be supplied to another rotor blade (14B, 14C, 14A).

7. Wind turbine according to any of the preceding claims, **characterized in that** at least one device for determining the icing-up of the rotor blades (14A, 14B, 14C), preferably the extent of the icing-up, and/or for measuring the temperature is provided.

8. Wind turbine according to any of the preceding claims, **characterized in that** the distribution of the heating power to the rotor blades (14A, 14B, 14C) is dependent on the state of icing-up and/or on the temperature of the rotor blades (14A, 14B, 14C).

9. Wind turbine according to any of the preceding claims, **characterized in that** the total available heating power can be supplied at least temporarily to one rotor blade (14A, 14B, 14C).

10. Wind turbine according to any of the preceding claims, **characterized in that** the available heating power can be distributed among a plurality of rotor blades (14A, 14B, 14C) in a dynamic manner, particularly preferably in a smooth or stepped manner.

11. Method for de-icing a wind turbine (10), in particular a wind turbine (10) according to one of the preceding claims, having a rotor (12) with a plurality of rotor blades (14A, 14B, 14C) and having at least one de-icing device for the rotor blades (14A, 14B, 14C), **characterized in that** the maximum available heating power can be distributed among a plurality of the rotor blades (14A, 14B, 14C) in a dynamic manner.

12. Method for de-icing a wind turbine according to Claim 11, **characterized in that** a plurality of the rotor blades (14A, 14B, 14C) are de-iced in parallel, preferably at the same time.

13. Method for de-icing a wind turbine according to either of Claims 11 or 12, **characterized in that** at least some of the heating power becoming available by reducing the heating power of one of the rotor blades (14A, 14B, 14C) is supplied to at least one other one of the rotor blades (14A, 14B, 14C).

14. Method for de-icing a wind turbine according to any of Claims 11 to 13, **characterized in that** the available heating power is reduced in the event of another consumer starting up, in particular a blade angle adjusting device of one of the rotor blades (14A, 14B, 14C).

15. Method for de-icing a wind turbine according to any of Claims 11 to 14, **characterized in that** the available heating power is distributed among the rotor blades (14A, 14B, 14C) in a smooth or stepped manner and/or **characterized in that** the respective heating power of the rotor blades (14A, 14B, 14c) is distributed among the rotor blades (14A, 14B, 14C) in a dynamic manner by a control unit, in particular a phase gating controller and/or a pulse-width controller.

## Revendications

1. Aérogénérateur, comprenant un rotor (12) muni de pales de rotor (14A, 14B, 14C) servant à entraîner un générateur en vue de produire de l'énergie électrique et muni d'un dispositif de dégivrage pour les pales de rotor (14A, 14B, 14C), le dispositif de dégivrage utilise une puissance de chauffage électrique pour le dégivrage des pales de rotor (14A, 14B, 14C), **caractérisé en ce que** le dispositif de dégivrage est configuré pour distribuer dynamiquement la puissance de chauffage maximale disponible entre plusieurs des pales de rotor (14A, 14B, 14C) .

2. Aérogénérateur selon la revendication 1, **caractérisé en ce que** le dispositif de dégivrage est configuré pour dégivrer plusieurs pales de rotor (14A, 14B, 14C) en parallèle, de préférence simultanément.

3. Aérogénérateur selon la revendication 1 ou 2, **caractérisé en ce que** le dispositif de dégivrage est configuré pour utiliser dynamiquement pour une autre des pales de rotor (14A, 14B, 14C) la puissance de chauffage qui est au moins temporairement non utilisée pour l'une des pales de rotor (14A, 14B, 14C).

4. Aérogénérateur selon l'une des revendications précédentes, **caractérisé en ce que** la puissance de chauffage des pales de rotor (14A, 14B, 14C) est réglable dynamiquement, de préférence séparément pour chacune des pales de rotor (14A, 14B, 14C).

5. Aérogénérateur selon l'une des revendications précédentes, **caractérisé en ce qu'**au moins une unité de régulation est présente, de préférence une régulation de découpage de phase et/ou une régulation de largeur d'impulsions, servant au réglage de la puissance de chauffage respective des pales de rotor (14A, 14B, 14C) et/ou servant à la distribution de la puissance de chauffage aux pales de rotor (14A, 14B, 14C).

6. Aérogénérateur selon l'une des revendications précédentes, **caractérisé en ce que** lors d'une réduction et/ou d'une déconnexion temporaire de la puissance de chauffage d'une pale de rotor (14A ; 14B ; 14C), la puissance de chauffage non utilisée peut au moins temporairement être acheminée dans une autre pale de rotor (14A ; 14B ; 14C).

7. Aérogénérateur selon l'une des revendications précédentes, **caractérisé en ce qu'**au moins un dispositif est présent pour déterminer le givrage des pales de rotor (14A, 14B, 14C), de préférence l'étendue du givrage, et/ou pour mesurer la température.

8. Aérogénérateur selon l'une des revendications précédentes, **caractérisé en ce que** la distribution de la puissance de chauffage aux pales de rotor (14A, 14B, 14C) est dépendante de l'état de givrage et/ou de la température des pales de rotor (14A, 14B, 14C).

9. Aérogénérateur selon l'une des revendications précédentes, **caractérisé en ce que** la totalité de la puissance de chauffage disponible peut être acheminée au moins temporairement à une pale de rotor (14A ; 14B ; 14C) .

10. Aérogénérateur selon l'une des revendications précédentes, **caractérisé en ce que** la puissance de chauffage disponible peut être distribuée dynamiquement entre plusieurs pales de rotor (14A, 14B, 14C), notamment de préférence progressivement ou par paliers.

11. Procédé de dégivrage d'un aérogénérateur (10), notamment un aérogénérateur selon l'une des revendications précédentes, comprenant un rotor (12) muni de pales de rotor (14A, 14B, 14C) et muni d'au moins un dispositif de dégivrage pour les pales de rotor (14A, 14B, 14C), **caractérisé en ce que** la puissance de chauffage maximale disponible peut être distribuée dynamiquement entre plusieurs des pales de rotor (14A, 14B, 14C).

12. Procédé de dégivrage d'un aérogénérateur selon la revendication 11, **caractérisé en ce que** plusieurs pales de rotor (14A, 14B, 14C) sont dégivrées en parallèle, de préférence simultanément.

13. Procédé de dégivrage d'un aérogénérateur selon la revendication 11 ou 12, **caractérisé en ce que** la puissance de chauffage qui est libérée en réduisant la puissance de chauffage de l'une des pales de rotor (14A, 14B, 14C) est au moins partiellement acheminée à au moins l'une des autres pales de rotor (14A, 14B, 14C).

14. Procédé de dégivrage d'un aérogénérateur selon l'une des revendications 11 à 13, **caractérisé en ce que** l'énergie de chauffage disponible est réduite lors de la mise en service d'un consommateur supplémentaire, notamment d'un dispositif de réglage de l'angle de pale de l'une des pales de rotor (14A, 14B, 14C).

15. Procédé de dégivrage d'un aérogénérateur selon l'une des revendications 11 à 14, **caractérisé en ce que** la puissance de chauffage est distribuée progressivement ou par paliers entre les pales de rotor (14A, 14B, 14C) et/ou **en ce que** la puissance de chauffage respective des pales de rotor (14A, 14B, 14C) est distribuée dynamiquement aux pales de rotor (14A, 14B, 14C) au moyen d'une unité de régulation, notamment par une régulation de découpage de phase et/ou une régulation de largeur d'impulsions.
